(19) Europäisches Patentamt
European Patent Office
Office européen des brevets

(11) EP 2 548 631 A1

(12) **EUROPEAN PATENT APPLICATION**

(43) Date of publication:
**23.01.2013 Bulletin 2013/04**

(21) Application number: **12177523.3**

(22) Date of filing: **23.07.2012**

(51) Int Cl.:
***B01D 69/02*** *(2006.01)* ***B01D 69/10*** *(2006.01)*
***B01D 71/12*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.07.2011 KR 20110073291**
**28.02.2012 KR 20120020423**
**20.07.2012 KR 20120079415**

(71) Applicant: **Samsung Electronics Co., Ltd.**
**Suwon-si, Gyeonggi-do, 443-742 (KR)**

(72) Inventors:
- **HAN, Jung Im**
**Gyeonggi-do, (KR)**
- **KONG, Hye Young**
**Gyeonggi-do, (KR)**
- **HAN, Sung Soo**
**Gyeonggi-do, (KR)**

(74) Representative: **Zijlstra, Robert Wiebo Johan**
**Elkington and Fife LLP**
**Prospect House**
**8 Pembroke Road**
**Sevenoaks, Kent TN13 1XR (GB)**

(54) **Cellulose-ether-ester support for forward osmosis membrane**

(57) A separation membrane may include a support layer and a polymer matrix layer. The support layer may include a polymer including a structural unit represented by Chemical Formula 1, that is to say a cellulose-ether-ester, and the polymer matrix layer is a semi-permeable membrane and has a higher rejection rate against a target material to be separated compared to the support layer. Chemical Formula 1 may be as described in the detailed description.

FIG.1

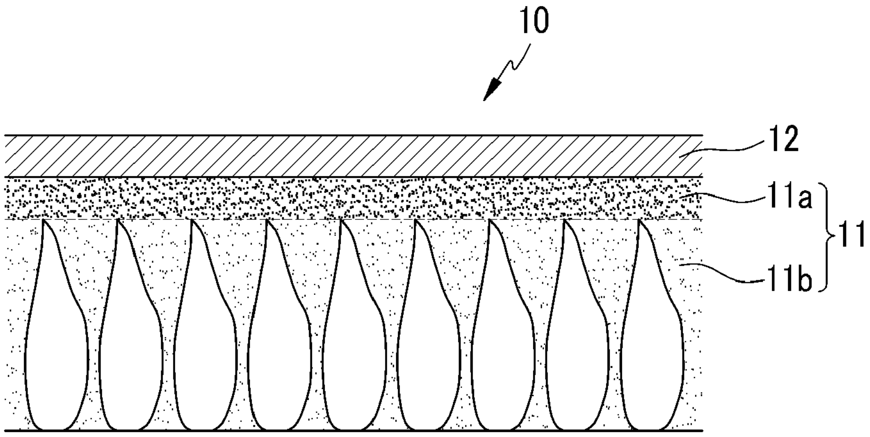


EP 2 548 631 A1

## Description

BACKGROUND OF THE INVENTION

Example embodiments herein relate to a separation membrane, a method of manufacturing the same, and a water treatment device including the separation membrane.

There has been a growing interest in forward osmosis (FO) with an increasing demand for the development of technology having lower energy consumption and a higher efficiency membrane. Forward osmosis, like reverse osmosis, requires a separation membrane that is capable of filtering a solute by inducing osmotic pressure. However, unlike reverse osmosis, forward osmosis uses a concentration difference instead of a pressure difference to separate materials. Thus, a forward osmosis process may be operated under very low pressure or even without pressure. According to a recent study, energy consumption per ton of water produced by reverse osmosis in sea water desalination is about 3-5 kWh, while energy consumption per ton may be lowered to about 1 kWh using forward osmosis.

Internal concentration polarization of a membrane is an important factor affecting the performance of a forward osmosis system. Concentration polarization refers to a phenomenon in which concentrations of materials around the surface and inside of a separation membrane vary from the surrounding environment during the process of separating water from a solution. Therefore, operation performance of a separation membrane is far below theoretically calculated values. Concentration polarization occurring around the separation membrane surface is referred to as external concentration polarization, which may be solved with relative ease by controlling the operation conditions of a separation membrane. However, concentration polarization occurring inside of a separation membrane may not be solved, and there is a demand for development of a separation membrane that is capable of reducing or minimizing the internal concentration polarization.

If a separation membrane commonly used for a reverse osmosis process is used for a forward osmosis process, significant concentration polarization may occur. In the forward osmosis process, chemical properties of the separation membrane are also an important factor affecting performance, as well as the structure of the separation membrane. In the reverse osmosis process, since movement of water passing a separation membrane occurs by pressure, the chemical properties of the support are not a critical parameter with regard to membrane permeation flow rate. However, in the forward osmosis process, since water permeation spontaneously occurs by an osmotic pressure difference, chemical properties of the support, i.e., hydrophilicity, largely influence the permeation flow rate. Recently, a study has reported that as a support material is more hydrophilic and has a thinner thickness and higher porosity, the permeation flow rate is improved.

SUMMARY OF THE INVENTION

Example embodiments relate to a separation membrane having an improved salt rejection rate as well as higher strength, higher porosity, and higher hydrophilicity.

Example embodiments additionally relate to a method of manufacturing the separation membrane.

Example embodiments also relate to a water treatment device using the separation membrane.

A separation membrane may include a support layer including a polymer including a structural unit represented by the following Chemical Formula 1, and a polymer matrix layer.

[Chemical Formula 1]

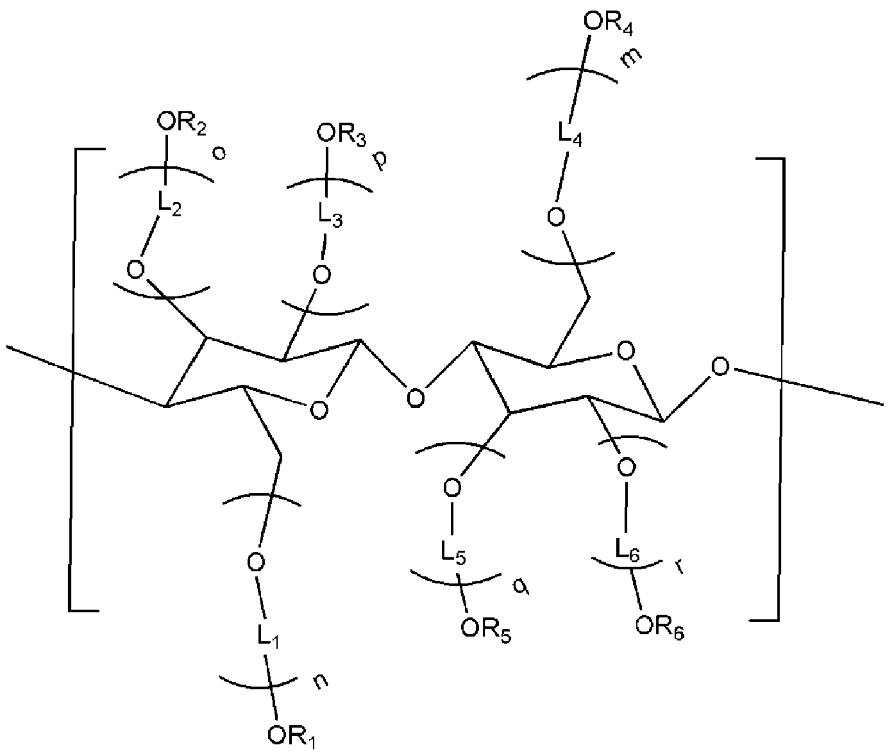

In the above Chemical Formula 1,

$R_1$ to $R_6$ are each independently hydrogen, a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, a substituted or unsubstituted C7 to C30 arylalkyl group, or $-COR_7$,

$R_7$ is a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, or a substituted or unsubstituted C7 to C30 arylalkyl group,

provided that at least one of $R_1$ to $R_3$ and at least one of $R_4$ to $R_6$ are each independently the same or different and are $-COR_7$, and

at least one of $R_1$ to $R_3$ and at least one of $R_4$ to $R_6$ are each independently the same or different, and are a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

$L_1$ to $L_6$ are each independently a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

n and m are each independently an integer ranging from 0 to 150, provided that the sum of n and m is at least 1, and

o, p, q, and r are each independently an integer ranging from 0 to 100.

The polymer has a degree of substitution (DS) by $R_1$ to $R_6$ of an alkyl group, a cycloalkyl group, a heterocycloalkyl group, an aryl group, a heteroaryl group, an alkylaryl group, or an arylalkyl group of about 0.5 to about 2.5 per anhydrous glucose unit, and has a degree of substitution by the substituents of $-COR_7$ in the above Chemical Formula 1 of about 0.5 to about 2.5 per anhydrous glucose unit.

The degree of substitution by the substituents of $-COR_7$ in the above Chemical Formula 1 may be about 0.8 to about 2 per anhydrous glucose unit.

The polymer may have a weight average molecular weight of about 20,000 to about 800,000.

The support layer may be a single membrane formed of a skin layer and a porous layer, wherein the skin layer has higher density than the porous layer.

The porous layer may have a finger-like porous structure.

The finger-like porous structure may include a plurality of finger-like pores. At least one finger-like pore forming the finger-like porous structure on the parallel cross-sectional surface of the porous layer to the surface of separation membrane may have a longest diameter of about 10μm to about 50 μm, the average of the longest diameter of the finger-like pores may range from about 20 μm to about 40 μm, and the thickness in the parallel direction to the surface of separation membrane between two adjacent finger-like pores from may range from about 1 μm to about 20 μm.

The support layer may have porosity of about 50 to about 80 volume%.

The support layer may have porosity (ε) of about 50 % to about 95 %, which is calculated by the following Equation 1.

[Equation 1]

$$\varepsilon = \frac{(m_1 - m_2)/\rho_w}{(m_1 - m_2)/\rho_w + m_2/\rho_p} \times 100$$

In the above Equation 1, $m_1$ is a mass (g) of the support layer in which water is impregnated, $m_2$ is a mass (g) of a dried separation membrane, $\rho_w$ is a density (g/cm$^3$ of water, and $\rho_p$ is a density (g/cm$^3$) of a polymer of the support layer.

The polymer matrix layer may be a semi-permeable membrane which is permeable for water and non-permeable for a target material to be separated.

The polymer matrix layer may have a rejection rate of about 50 to about 99.9 % against the target material to be separated.

The polymer matrix layer may be provided on one surface or both surfaces of the support layer.

The polymer matrix layer may be provided on one surface contacting the skin layer of the support layer.

The polymer matrix layer may include one selected from polyamide, cross-linked polyamide, polyamide-hydrazide, poly(amide-imide), polyimide, poly(allylamine)hydrochloride/poly(sodium styrenesulfonate) (PAH/PSS), polybenzimidazole, sulfonated poly(aryleneethersulfone), and a combination thereof, or a composite of an inorganic material and one selected from polyamide, cross-linked polyamide, polyamide-hydrazide, poly(amide-imide), polyimide, poly (allylamine)hydrochloride/poly(sodium styrenesulfonate) (PAH/PSS), polybenzimidazole, sulfonated poly(aryleneethersulfone), and a combination thereof.

The polymer matrix layer may have a thickness of about 0.01 μm to about 0.5 μm.

The structure factor (S) of separation membrane defined by the following Equation 2 may range from about 10 to about 1500.

[Equation 2]

$$S = KD = \left(\frac{D}{J_w}\right) \ln\left(\frac{B + A\Pi_{Db}}{B + J_w}\right)$$

In the above Equation 2, A and B are determined by the following equation:

$$A = J_W^{RO} / \Delta P$$

$$B = J_W^{RO} \left(\frac{1 - R}{R}\right) \exp\left(-\frac{J_W^{RO}}{k}\right)$$

wherein $A = J_w^{RO} / \Delta P$ is water permeability (unit: LMH) in a reverse osmosis (RO) system, $\Delta P$ is an applied pressure in a reverse osmosis (RO) system, R is a salt rejection rate in a reverse osmosis (RO) system, where R=1-cp/cb (cb is a salt concentration of a bulk feed solution and cp is a salt concentration of permeated water), k is a material transfer coefficient in a crossflow cell,

D is a diffusion coefficient of a draw solute in a forward osmosis system, $J_w$ is a water permeation flow rate of a separation membrane in a forward osmosis system, $\Pi_{D,b}$ is a bulk osmotic pressure of a draw solution in a forward osmosis system, and

K is calculated from the following equation $K=t_s\ \tau/D\varepsilon$ wherein $t_s$ is a thickness of the support layer, $\tau$ is tortuosity of the separation membrane, and $\varepsilon$ is a porosity of the separation membrane.

The separation membrane may be a microfiltration membrane, an ultrafiltration membrane, a nanofiltration membrane, a reverse osmotic membrane, or a forward osmotic membrane.

A method of manufacturing a separation membrane may include preparing a polymer solution including a polymer including a structural unit represented by the following Chemical Formula 1 and an organic solvent; casting the polymer solution on a substrate; immersing the substrate casted with the polymer solution in a non-solvent to a support layer including a skin layer and a porous layer; and performing an interface polymerization reaction of a polymer for a dense layer on one side or both sides of the support layer to provide a polymer matrix layer.

[Chemical Formula 1]

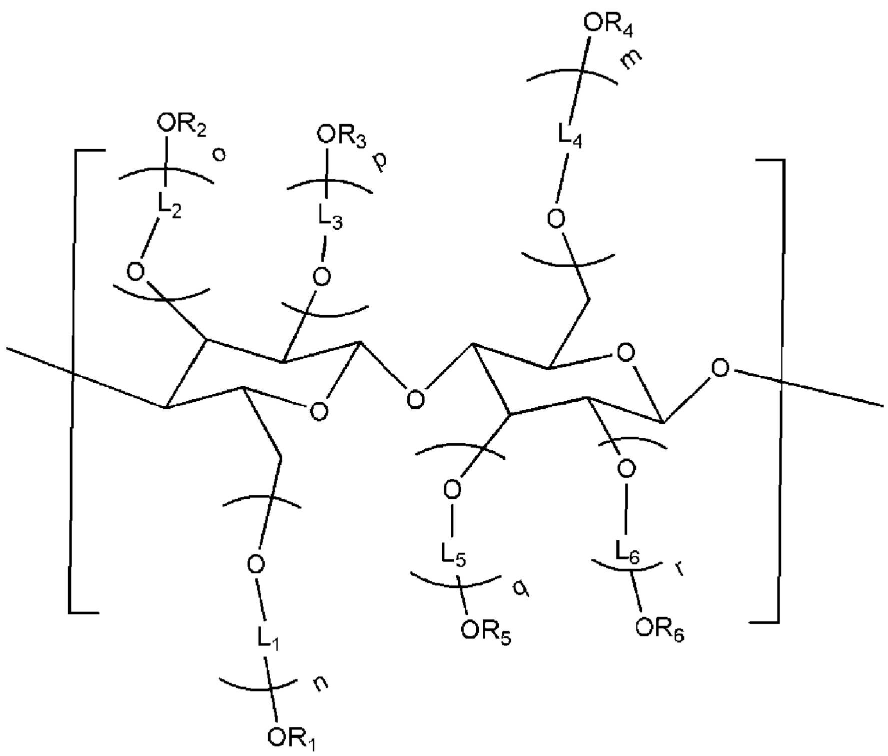

In the above Chemical Formula 1,

$R_1$ to $R_6$ are each independently hydrogen, a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, a substituted or unsubstituted C7 to C30 arylalkyl group, or $-COR_7$,

$R_7$ is a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, or a substituted or unsubstituted C7 to C30 arylalkyl group,

provided that at least one of $R_1$ to $R_3$ and at least one of $R_4$ to $R_6$ are each independently the same or different and are $-COR_7$, and

at least one of $R_1$ to $R_3$ and at least one of $R_4$ to $R_6$ are each independently the same or different, and are a substituted

or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

$L_1$ to $L_6$ are each independently a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

n and m are each independently an integer ranging from 0 to 150, provided that the sum of n and m is at least 1, and o, p, q, and r are each independently an integer ranging from 0 to 100.

The polymer solution may include a polymer including the structural unit represented by Chemical Formula 1 in about 9 to about 15 wt%.

The method may further include annealing the composite membrane including the support layer and the polymer matrix layer.

A forward osmosis water treatment device may include a feed solution including impurities to be purified; an osmosis draw solution having higher osmotic pressure than the feed solution; the separation membrane positioned so that one side contacts the feed solution and the other side contacts the osmosis draw solution; a recovery system configured to separate a draw solute from the osmosis draw solution; and a connector configured to reintroduce the draw solute of the osmosis draw solution separated by the recovery system back into the osmosis draw solution contacting the separation membrane.

The forward osmosis water treatment device may further include a means for producing treated water from the remainder of the osmosis draw solution from which draw solute has been separated by the recovery system. The treated water includes water that has passed through the semi-permeable membrane by osmotic pressure from the feed solution to the osmosis draw solution.

## BRIEF DESCRIPTION OF THE DRAWINGS

FIG. 1 is a schematic cross-sectional view of the separation membrane according to example embodiments.

FIG. 2 is a schematic view of forward osmosis water treatment device according to example embodiments.

FIG. 3A and FIG. 3B are SEM photographs of a support layer of a separation layer according to example embodiments.

FIG. 4 is a graph showing water permeation flow rates according to example embodiments.

FIG. 5 is a graph showing NaCl reverse salt fluxes according to example embodiments.

FIG. 6 is a graph showing water permeation flow rates and NaCl reverse salt fluxes for comparative examples.

## DETAILED DESCRIPTION OF THE EMBODIMENTS

This disclosure will be described more fully hereinafter in the following detailed description, in which various examples are described. This disclosure may be embodied in many different forms and is not to be construed as limited to the examples set forth herein.

As used herein, when a definition is not otherwise provided, the term "substituted" may refer to one substituted with a C1 to C30 alkyl group; a C1 to C10 alkylsilyl group; a C3 to C30 cycloalkyl group; a C6 to C30 aryl group; a C2 to C30 heteroaryl group; a C1 to C10 alkoxy group; a fluoro group; a C1 to C10 trifluoroalkyl group such as a trifluoromethyl group; or a cyano group.

As used herein, when a definition is not otherwise provided, the prefix "hetero" may refer to one including 1 to 3 heteroatoms selected from N, O, S, and P, while the remaining structural atoms in a compound or a substituent are carbons.

As used herein, when a definition is not otherwise provided, the term "combination thereof" refers to at least two substituents bound to each other by a linker, or at least two substituents condensed to each other.

As used herein, the symbol " * " refers to a point linked to another atom or chemical formula.

As used herein, when a definition is not otherwise provided, the term "alkyl group" may refer to a "saturated alkyl group" without an alkenyl group or an alkynyl group, or an "unsaturated alkyl group" including at least one of an alkenyl group or an alkynyl group. The term "alkenyl group" may refer to a substituent in which at least two carbon atoms are bound in at least one carbon-carbon double bond, and the term "alkynyl group" refers to a substituent in which at least two carbon atoms are bound in at least one carbon-carbon triple bond. The alkyl group may be a branched, linear, or cyclic alkyl group.

The alkyl group may be a linear or branched C1 to C20 alkyl group, and more specifically a C1 to C6 alkyl group, a C7 to C10 alkyl group, or a C11 to C20 alkyl group.

For example, a C1 to C4 alkyl may have 1 to 4 carbon atoms, and may be selected from the group consisting of methyl, ethyl, propyl, iso-propyl, n-butyl, iso-butyl, sec-butyl, and t-butyl.

Examples of the alkyl group include a methyl group, an ethyl group, a propyl group, an isopropyl group, a butyl group, an isobutyl group, a t-butyl group, a pentyl group, a hexyl group, an ethenyl group, a propenyl group, a butenyl group, a cyclopropyl group, a cyclobutyl group, a cyclopentyl group, a cyclohexyl group, and the like.

The term "aromatic group" may refer to a substituent including a cyclic structure where all elements have p-orbitals which form conjugation. For example, an aryl group and a heteroaryl group may be used.

The term "aryl group" may refer to a monocyclic or fused ring-containing polycyclic (i.e., rings sharing adjacent pairs of carbon atoms) groups.
The term "aryl group" may refer to a monocyclic or fused ring-containing polycyclic (i.e., rings sharing adjacent pairs of carbon atoms) groups. When the heteroaryl group is a fused ring, each ring may include 1 to 3 heteroatoms.

In the interest of brevity, parts unrelated or only tangentially relevant to the present disclosure may have been omitted. Also, the same reference numbers have been assigned for the same or similar constituent elements.

The size and thickness of each constituent element as shown in the drawings may not have been drawn to scale in order to facilitate understanding and ease of description, and this disclosure is not necessarily limited to as shown.

In the drawings, the thickness of layers, films, panels, regions, etc., may have been exaggerated for clarity. It will be understood that when an element such as a layer, film, region, or substrate is referred to as being "on" another element, it can be directly on the other element or intervening elements may also be present. In contrast, when an element is referred to as being "directly on" another element, there are no intervening elements present.

FIG. 1 is a schematic view showing a cross-sectional surface of the separation membrane 10 according to example embodiments. The separation membrane 10 includes a support layer 11 and a polymer matrix layer 12. The separation membrane 10 may have a structure in which the support layer 11 and the polymer matrix layer 12 are sequentially stacked.

The support layer 11 includes a polymer including a structural unit represented by the following Chemical Formula 1.

[Chemical Formula 1]

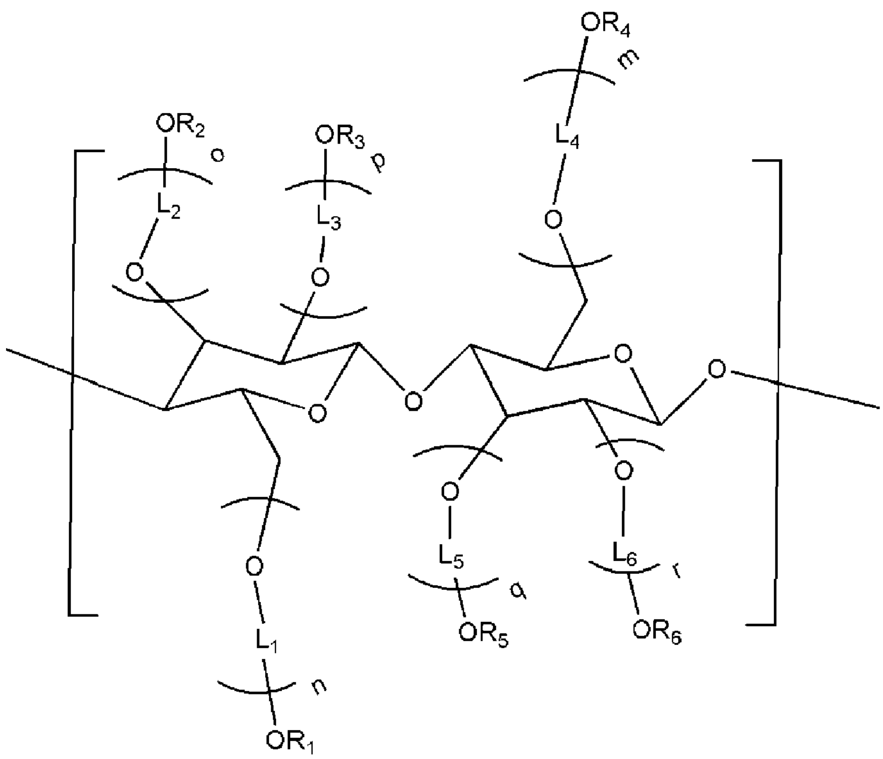

In the above Chemical Formula 1,

$R_1$ to $R_6$ are each independently hydrogen, a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, a substituted or unsubstituted C7 to C30 arylalkyl group, or $-COR_7$,

$R_7$ is a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, or a substituted or unsubstituted C7 to C30 arylalkyl group,

provided that at least one of $R_1$ to $R_3$ and at least one of $R_4$ to $R_6$ are each independently the same or different and are $-COR_7$, and

at least one of $R_1$ to $R_3$ and at least one of $R_4$ to $R_6$ are each independently the same or different, and are a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

$L_1$ to $L_6$ are each independently a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

n and m are each independently an integer ranging from 0 to 150, provided that the sum of n and m is at least 1, and

o, p, q, and r are each independently an integer ranging from 0 to 100.

For example, n and m may be each independently an integer of 2 to 100, and specifically an integer of 2 to 50.

In the polymer, m may have an average value of about 2 to about 100, and n may have an average value of about 2 to about 100.

Also, o, p, q, and r may be each independently an integer of 0 to 30, and specifically an integer of 0 to 15.

In the above Chemical Formula 1, the alkyl group or alkylene group may be linear or branched.

Since the polymer is insoluble in water, it is relatively easy to manufacture a separation membrane, and a higher hydrophilicity and higher strength may be realized.

The polymer is insoluble in water due to the hydrophobic ester group including a $-COR_7$ group, may have hydrophilicity of a cellulose backbone, and may appropriately control the degree of hydrophilicity as well as solubility in a specific solvent by appropriately controlling the kind of substituents such as an alkyl group or an aryl group, and the like, and the substitution degree. Therefore, the separation membrane including the polymer may be insoluble in water, and soluble in an organic solvent selected from acetone, acetic acid, methanol, isopropanol, 1-methoxy-2-propanol, trifluoroacetic acid (TFA), tetrahydrofuran (THF), pyridine, methylenechloride, dimethyl formamide (DMF), dimethyl acetamide (DMAC), N-methyl-2-pyrrolidone (NMP), terpineol, 2-butoxyethylacetate, 2 (2-butoxyethoxy)ethylacetate, and the like.

The polymer may be subjected to a process such as solvent casting, wet spinning, dry spinning, and the like using the above properties, and it may be applied to a melt process such as injection and melt spinning, and the like, because it has a melting point.

For example, the polymer has a degree of substitution (DS) by R1 to R6 of an alkyl group, a cycloalkyl group, a heterocycloalkyl group, an aryl group, a heteroaryl group, an alkylaryl group, or an arylalkyl group, of about 0.5 to about 2.5 per anhydrous glucose unit, and has a degree of substitution by the substituents of $-COR_7$ in the above Chemical Formula 1 of about 0.5 to about 2.5 per anhydrous glucose unit.

For example, when R1 to R6 are a methyl group (Me), and a degree of substitution (DS) is respectively about 1, 1.25, 1.5, 1.75, or 2, the polymer may include an —OMe (Me is a methyl group) group in an amount of about 17, 21, 25, 29, or 33 wt%, respectively.

The degree of substitution (DS) may refer to an average number of substituted hydroxyl groups per anhydrous glucose unit. Since a maximum of 3 hydroxyl groups exist per anhydrous glucose unit, if it is substituted with a monofunctional substituent, the theoretical maximum degree of substitution may be 3.

A degree of substitution by the substituents of $-COR_7$ in the above Chemical Formula 1 may be about 0.8 to about 2 per anhydrous glucose unit.

When all $R_1$ to $R_6$ is not hydrogen, the sum of the degree of substitution (DS) when $R_1$ to $R_6$ are an alkyl group, a cycloalkyl group, a heterocycloalkyl group, an aryl group, a heteroaryl group, an alkylaryl group, or an arylalkyl group and the degree of substitution (DS) of the $-COR_7$ substituent in chemical Formula 1 is 3. In this case, for example, the degree of substitution (DS) when R1 to R6 are an alkyl group, a cycloalkyl group, a heterocycloalkyl group, an aryl group, a heteroaryl group, an alkylaryl group, or an arylalkyl group may be about 1.75 per anhydrous glucose unit, and the degree of substitution (DS) of the $-COR_7$ substituent in Chemical Formula 1 may be about 1.25. In another instance,

the degree of substitution (DS) when R1 to R6 are an alkyl group, a cycloalkyl group, a heterocycloalkyl group, an aryl group, a heteroaryl group, an alkylaryl group, or an arylalkyl group may be about 1.7 per anhydrous glucose unit, and the degree of substitution (DS) of the $-COR_7$ substituent group in the above Chemical Formula 1 may be about 1.3. In a further example, the degree of substitution (DS) when R1 to R6 are an alkyl group, a cycloalkyl group, a heterocycloalkyl group, an aryl group, a heteroaryl group, an alkylaryl group, or an arylalkyl group may be about 1.25 per anhydrous glucose unit, and the degree of substitution (DS) of the $-COR_7$ substituent in Chemical Formula 1 may be about 1.75.

Including the case that R1 to R6 are hydrogen, the sum of the degree of substitution (DS) when R1 to R6 are an alkyl group, a cycloalkyl group, a heterocycloalkyl group, an aryl group, a heteroaryl group, an alkylaryl group, or an arylalkyl group and the degree of substitution (DS) of the $-COR_7$ substituent in Chemical Formula 1 is less than 3.

Since the polymer may be prepared so as to have a relatively high molecular weight by the subsequently mentioned manufacturing method, a relatively high strength may be realized. If the porosity of a separation membrane increases, the strength may become disadvantageous. Thus, the strength may be compensated by preparing a polymer with a a relatively high molecular weight.

Since the polymer may be prepared with a relatively high molecular weight, higher strength may be realized, and thus the membrane may be prepared so as to have a higher porosity. For example, the polymer may have a weight average molecular weight of about 20,000 to about 800,000. For another example, the polymer may have a weight average molecular weight of about 200,000 to about 300,000 considering a membrane forming property such as viscosity and the like. When the weight average molecular weight is greater than or equal to about 500,000, polymer solubility tends to substantially decrease. When the polymer has a molecular weight within the above range, it may have suitable strength for manufacturing a separation membrane.

Hereinafter, a method of preparing the polymer is described.

First, a cellulose compound is subject to an etherification reaction to obtain a cellulose ether compound having at least one hydroxyl group, and the cellulose ether compound is subject to an esterification reaction to obtain cellulose ether. Thereby, a polymer is obtained.

For example, the method of preparing the polymer according to example embodiments will be explained in further detail. First, a hydrogen of at least a first hydroxyl group of cellulose is substituted with an alkyl group, a cycloalkyl group, a heterocycloalkyl group, an aryl group, a heteroaryl group, an alkylaryl group or an arylalkyl group (hereinafter, referred to as 'substituent') to form an ether group. A hydrogen of at least a second hydroxyl group of the cellulose is also substituted with an alkyl group, a cycloalkyl group, a heterocycloalkyl group, an aryl group, a heteroaryl group, an alkylaryl group or an arylalkyl group containing at least a third hydroxyl group (hereinafter, referred to as 'substituent containing at least one hydroxyl group'). The alkyl group or the alkyl group of the substituent containing at least one hydroxyl group may include a linear or branched type. The hydrogen of the at least one hydroxyl group of the substituent containing at least one hydroxyl group may also be substituted with a substituent or a substituent containing at least one hydroxyl group. Thus, the hydrogen of the at least one hydroxyl group of the substituent containing at least one hydroxyl group may be repeatedly substituted to form a moiety of -(O-L1)n-, -(O-L2)o-, -(O-L3)p-, -(O-L4)m-, -(O-L5)q-, or -(O-L6)r- in the structure of the above Chemical Formula 1.

First, the cellulose compound is primarily etherified, so the hydrogen bond of cellulose is broken to be converted into an amorphous structure. Since the synthesized cellulose ether has the amorphous structure, the hydroxyl group included in the cellulose ether becomes a hydroxyl group having a desirable level of reactivity. Subsequently, the hydrogen of the hydroxyl group having the desirable level of reactivity is substituted with a $-COR_7$ group (this substitution reaction is referred to as esterification) to esterify the cellulose ether. Thus, an esterified cellulose ether is obtained.

According to the above preparation method, cellulose may be sequentially etherified and esterified, thus esterifying without substantially decreasing the molecular weight. In other words, the manufacturing method is not needed to break the crystal structure of the cellulose to be esterified, and a polar catalyst such as an inorganic acid used for breaking the crystal structure of cellulose is not used, so esterified cellulose ether having a high molecular weight may be provided since the cellulose main chain is not cut by the polar catalyst. A membrane manufactured with the esterified cellulose ether having a relatively high molecular weight may exhibit higher strength and favorable durability while having hydrophilicity.

The polymer may control the hydrophilicity by adjusting the kind of substituent and the substituted degree as well as having hydrophilicity caused by cellulose, and the water-solubility or water-insolubility may be provided on the membrane depending upon the esterification degree. For example, if applying to a water treatment membrane, the esterification degree may be adjusted to provide water-insolubility. In order to provide water-insolubility, the degree of substitution (DS) of the substituent of $-COR_7$ in Chemical Formula 1 may be about 0.5 to about 2.5, for example, about 0.8 to about 2 or about 1.1 to about 1.9 per unit of anhydrous glucose.

A degree of hydrophilicity of the separation membrane including the polymer may be measured by dropping a droplet on the surface of the separation membrane to measure a contact angle

For example, the degree of substitution by the RCO- group may be measured and controlled by titration.

For example, the contact angle of the support layer 11 including the polymer, to water may be about 50° to

about 65°.

The contact angle is increased by roughness when forming a separation membrane, and thus is largely influenced by the structure of pores. Therefore, pore characteristics may be indirectly determined from the contact angle.

When water first enters into a small pore, for a hydrophobic material, a relatively strong push with pressure or hydrophilic treatment is required, while for a hydrophilic material, water may properly enter into the pore only by osmosis due to favorable wettability, thus reducing generation of dead pores. Further, a hydrophobic material may generate a trap such as a bubble when operating the membrane, while a hydrophilic material is advantageous in terms of mass transfer, thus reducing generation of dead pores.

The support layer 11 including the polymer has favorable hydrophilicity, so water permeation resistance may be reduced.

The support layer 11 may be manufactured as a single layer formed of a skin layer 11a and a porous layer 11b (FIG. 1). For example, a single layer formed of a skin layer 11a and a porous layer 11 b may be manufactured using the polymer by non-solvent induced phase separation (NIPS). The single layer refers to a layer consisting of the same material

The skin layer 11a has a higher density than the porous layer 11 b. The porous layer 11b may have the various shapes of porous structure, and the pore shape, the porosity, or the like may be changed depending upon the kind of desirable separation membrane. For example, a finger-like structure, a sponge-type structure, a finger-like/sponge type mixed structure, and the like may be enumerated. FIG. 1 shows the porous layer 11b having a finger-like structure. As shown in FIG. 1, the finger-like structure means that finger-shaped pores are formed in a substantially vertical direction to the surface of membrane.

For example, one finger-like pore of the porous layer 11b forming a finger-like structure in the cross-sectional surface in the parallel direction to the surface of separation membrane 10 may have the longest diameter of about 10 μm to about 50 μm, and the average of longest diameter of one finger-like pore may range from about 20 μm to about 40 μm. In addition, the thickness in a parallel direction to the surface of separation membrane 10 between two adjacent finger-like pores may range from about 1 μm to about 20 μm.

The support layer 11 including the porous layer 11 b having the porous structure may have porosity of about 50 % to about 80 %. The porosity means the relative volume of pore in the entire membrane volume, and the pore volume of the membrane may be measured by a known method and a commercially available device.

On the other hand, porosity (ε) may be experimentally measured according to the following Equation 1. The porosity (ε) obtained by the following Equation 1 is experimentally measured and may not be the same numerical value as the pore volume.

[Equation 1]

$$\varepsilon = \frac{(m_1 - m_2)/\rho_w}{(m_1 - m_2)/\rho_w + m_2/\rho_p} \times 100$$

In the above Equation 1, $m_1$ is a mass (g) of the support layer in which water is impregnated, $m_2$ is a mass (g) of a dried separation membrane, $\rho_w$ is a density (g/cm$^3$ of water, and $\rho_p$ is a density (g/cm$^3$ of a polymer of the support layer.

The support layer 11 may have porosity (ε) of about 50% to about 95%. For example, the support layer 11 may have porosity (ε) of about 70 % to about 90 %.

The skin layer 11a and the porous layer 11 b may have a thickness ratio of about 1 /10 to about 1/400.

For example, the skin layer 11a may have a thickness of about 0.01 μm to about 20 μm.

For example, the support layer 11 may have a thickness of less than about 200 μm, or of about 10 μm to about 200 μm, and particularly of about 25 μm to about 100 μm.

The separation membrane 10 is a composite membrane including a polymer matrix layer 12 to improve the rejection rate against salt compared to the case of including a single support layer 11. The composite membrane means a membrane consisting of heterogeneous materials. The separation membrane 10 is a composite membrane in which the support layer 11 and the polymer matrix layer 12 are formed with different kinds of materials from each other.

The polymer matrix layer 12 is a semi-permeable membrane which is permeable for water and non-permeable for the target material to be separated. The polymer matrix layer 12 may act as an active layer since it is formed as a dense polymer layer, and thus the polymer matrix layer 12 has a higher rejection rate against the target material to be separated than the support layer 11 since it is formed as a dense polymer membrane. As mentioned above, the support layer 11 includes a porous layer including pores such as finger-like structures, but the polymer matrix layer 12 has a higher rejection rate against the target material to be separated than the support layer 11 since the polymer matrix layer 12 is formed as a non-porous dense polymer membrane.

The polymer matrix layer 12 may be fabricated as a dense polymer membrane to apply to an active layer in the separation membrane, and may have a rejection rate of, for example, about 50 to about 99.9 % against the target material to be separated. The rejection rate is calculated by (1-Cp/Cf)*100. Cp is a concentration of target material to be separated which is passed through the polymer matrix layer, and Cf is a concentration of feed including the target material to be separated. For example, the polymer matrix layer 12 may have a rejection rate against the target material to be separated of about 80 to about 99.9 %, or the rejection rate against the target material to be separated may be about 90 to about 99.9 %.

The material of polymer matrix layer 12 may include any polymer used for the material for the separation membrane without limitations, and particularly, any polymer as long as it may provide a dense polymer membrane, without limitations. For example, the polymer matrix layer may include one selected from polyamide, cross-linked polyamide, polyamide-hydrazide, poly(amide-imide), polyimide, poly(allylamine)hydrochloride/poly(sodium styrenesulfonate) (PAH/PSS), polybenzimidazole, sulfonated poly(aryleneethersulfone), and a combination thereof, or a composite of an inorganic material and one selected from polyamide, cross-linked polyamide, polyamide-hydrazide, poly(amide-imide), polyimide, poly(allylamine)hydrochloride/poly(sodium styrenesulfonate) (PAH/PSS), polybenzimidazole, sulfonated poly (aryleneethersulfone), and a combination thereof. The inorganic material may include zeolite, a metal oxide, carbon nanotubes, and the like, but is not limited thereto.

For example, the polyamide may include a structural unit represented by the following Chemical Formula 5.

[Chemical Formula 5]

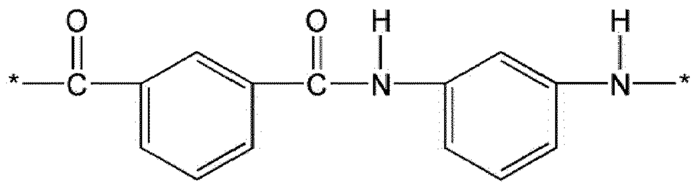

The cross-linked polyamide may include a structural unit represented by the above Chemical Formula 5 and a structural unit represented by the following Chemical Formula 6.

[Chemical Formula 6]

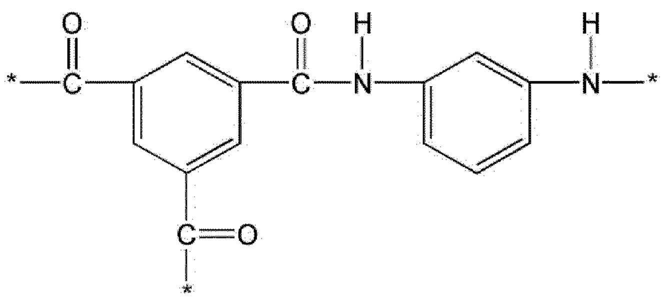

The polyamide-hydrazide may include a structural unit represented by the following Chemical Formula 7.

[Chemical Formula 7]

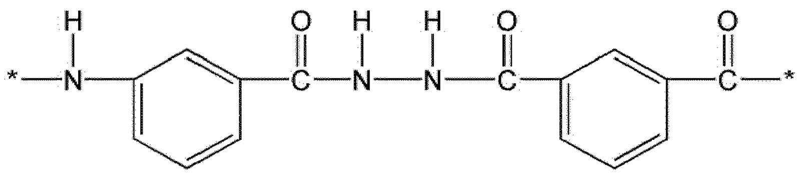

The poly(amide-imide) may include a structural unit represented by the following Chemical Formula 8.

[Chemical Formula 8]

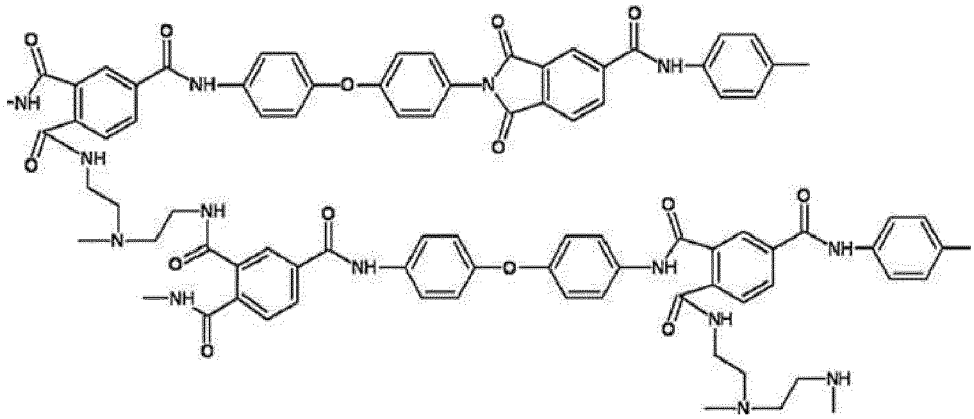

The polyimide may include a structural unit represented by the following Chemical Formula 9.

[Chemical Formula 9]

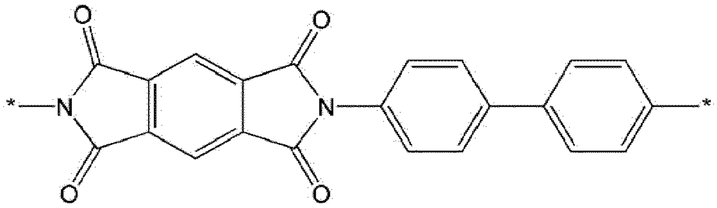

The polybenzimidazole may include a structural unit represented by the following Chemical Formula 10.

[Chemical Formula 10]

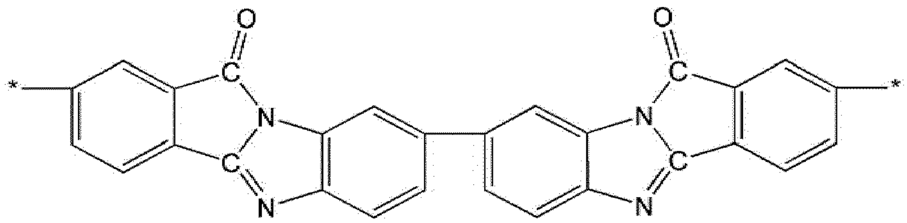

The PAH/PSS may include a structural unit represented by the following Chemical Formula 11.

[Chemical Formula 11]

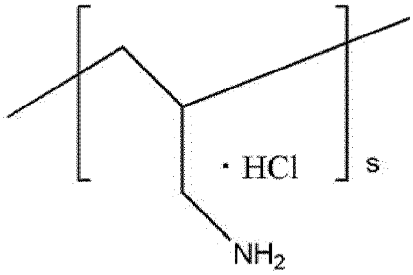

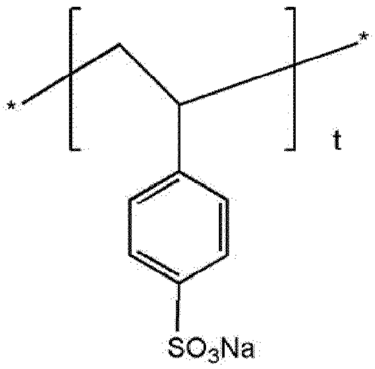

The sulfonated poly(aryleneethersulfone) may include a structural unit represented by the following Chemical Formula 12 and a structural unit represented by Chemical Formula 13. In the above Chemical Formulas, s and t are positive integers indicating that each structural unit is present in plural.

[Chemical Formula 12]

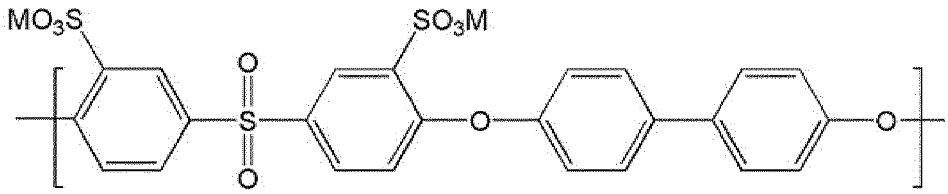

In the above Chemical Formula, M is an alkali metal.

[Chemical Formula 13]

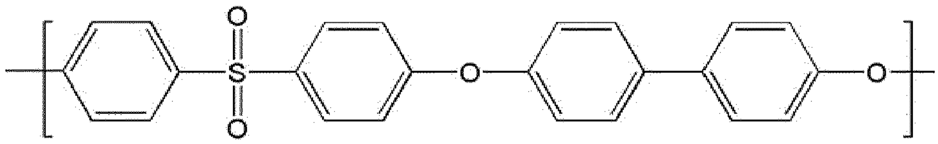

According to the usage of separation membrane, the kind of polymer for providing a polymer matrix layer 12 may be selected. For example, in the case that the separation membrane is designated to be used in a forward osmosis water treatment device for desalinating sea water, in order to remove NaCl in sea water, the polymer matrix layer 12 may be formed with a nonporous polyamide layer to provide a separation layer for this usage.

Since the water-permeability of the separation membrane 10 may be deteriorated by including a polymer matrix layer 12, the polymer matrix layer 12 may be formed in a thickness as thin as possible in order to minimize the deterioration so that the water-permeability is ensured. For example, the polymer matrix layer 12 may have a thickness of about 0.01 $\mu$m to about 0.5 $\mu$m. For example, polymer matrix layer 12 may have a thickness of about 0.1 $\mu$m to about 0.5 $\mu$m.

The polymer matrix layer 12 may be stacked on one surface or both surfaces of the support layer 11. FIG. 1 shows a separation membrane 10 in which the polymer matrix layer 12 is stacked on the skin layer 11a of the support layer 11. The polymer matrix layer 12 may be stacked on the support layer 11 according to the interface polymerization reaction.

The separation membrane 10 is measured for a structure factor (S) defined by the following Equation 2 to determine the characteristics of the membrane.

The structure factor (S) may be defined by the following Equation 2.

[Equation 2]

$$S = KD = \left(\frac{D}{J_w}\right)\ln\left(\frac{B + A\Pi_{Db}}{B + J_w}\right)$$

In the above Equation 2, A is intrinsic permeability of water in a reverse osmosis (RO) system, B is a solute permeation coefficient in a reverse osmosis (RO) system, and A and B are each independently determined by the following equations.

$$A = J_W^{RO} / \Delta P$$

$$B = J_W^{RO}\left(\frac{1-R}{R}\right)\exp\left(-\frac{J_W^{RO}}{k}\right)$$

$A = J_W^{RO} / \Delta P$ is water permeability (unit: LMH) in a reverse osmosis (RO) system, $\Delta P$ is an applied pressure in a reverse osmosis (RO) system, R is a salt rejection rate in a reverse osmosis (RO) system, where R=1-cp/cb (cb is a salt concentration of a bulk feed solution and cp is a salt concentration of permeated water), and k is a material transfer coefficient in a crossflow cell,

In Equation 2, A and B are constant values calculated as described above, and D is a diffusion coefficient of a draw solute in a forward osmosis system, Jw is a water permeation flow rate of a separation membrane in a forward osmosis system, and $\Pi$ D,b is a bulk osmotic pressure of a draw solution in a forward osmosis system. K is calculated from the following equation $K=ts\tau/D\varepsilon$ wherein ts is a thickness of the support layer, $\tau$ is tortuosity of the separation membrane, and $\varepsilon$ is a porosity of the separation membrane.

The tortuosity ($\tau$) of the membrane is a ratio of substantial transportation passage of water in the inner membrane to the thickness of membrane. When the tortuosity is 1, water may be vertically passed without any interruption in a thickness direction of the membrane. When there is a structure interrupting water flow in the inner membrane (e.g., high density of membrane), the tortuosity may be increased. Accordingly, the lowest limitation of tortuosity is 1, and the unit thereof is not presented since it is a ratio.

The porosity ($\varepsilon$) of the membrane means a ratio of pores to the inner volume of the membrane. In other words, when the porosity is 1, the inside of the separation membrane is empty. As the porosity is lower, the density is higher. Since the porosity is also a ratio, it has no unit.

The structure factor S defined above may be considered as the resistance degree caused by the membrane structure in the view of mass transfer by diffusion. Accordingly, it means that the resistance to water-permeability is increased when increasing the structure factor S.

The structure factor S to the separation membrane 10 may range from about 10 to about 1500. In addition, for example, the structure factor S to the separation membrane 10 may range from about 25 to about 1500.

The separation membrane 10 may be a microfiltration membrane, an ultrafiltration membrane, a nanofiltration membrane, a reverse osmotic membrane, or a forward osmotic membrane depending on its use. The type of the separation membrane may be classified according to the size of particles to be separated. A method of manufacturing the separation membrane is not specifically limited, and it may be manufactured by any known method while controlling the size, structure of pores, and the like.

The separation membrane 10 may be used for, for example, water treatment such as water purification, waste water treatment and reuse, sea water desalination, and power generator using osmotic pressures induced by the difference in salt concentrations. The separation membrane 10 may be used for, for example, a forward osmosis water treatment device, without limitation.

According to example embodiments, a method of manufacturing a separation membrane 10 is also provided.

The method of manufacturing the separation membrane 10 may include preparing a polymer solution including

a polymer including a structural unit represented by the following Chemical Formula 1 and an organic solvent; casting the polymer solution on a substrate; immersing the substrate casted with the polymer solution in a non-solvent to a support layer 11 including a skin layer and a porous layer; and performing an interface polymerization reaction of a polymer for a dense layer on one side or both sides of the support layer 11 to provide a polymer matrix layer.

[Chemical Formula 1]

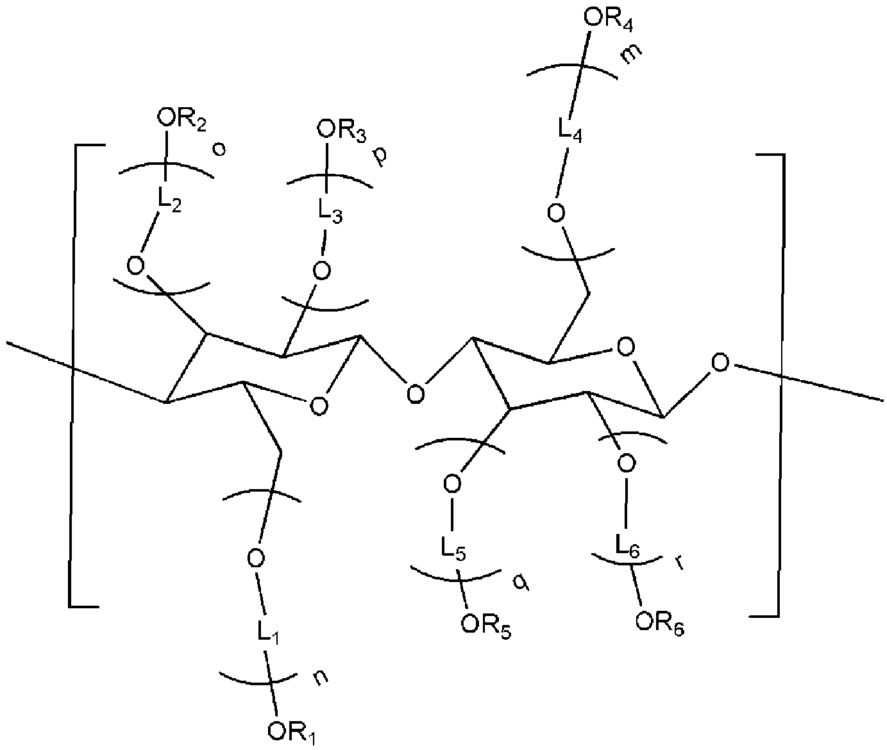

In the above Chemical Formula 1,

$R_1$ to $R_6$ are each independently hydrogen, a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, a substituted or unsubstituted C7 to C30 arylalkyl group, or $-COR_7$,

$R_7$ is a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, or a substituted or unsubstituted C7 to C30 arylalkyl group,

provided that at least one of $R_1$ to $R_3$ and at least one of $R_4$ to $R_6$ are each independently the same or different and are $-COR_7$, and

at least one of $R_1$ to $R_3$ and at least one of $R_4$ to $R_6$ are each independently the same or different, and are a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

$L_1$ to $L_6$ are each independently a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

n and m are each independently an integer ranging from 0 to 150, provided that the sum of n and m is at least 1, and

o, p, q, and r are each independently an integer ranging from 0 to 100.

Casting of the polymer solution on a substrate may be performed under relative humidity of about 65 $\pm$ 5 % and a temperature of about 25 $\pm$ 1 °C.

The immersing of the substrate casted with the polymer solution in a non-solvent may be performed by immersing the substrate casted with the polymer solution in a non-solvent coagulation bath to form a membrane. Since the organic

solvent in the polymer solution and a non-solvent are miscible, and the polymer is insoluble in a non-solvent, and if the substrate casted with the polymer solution is immersed in a non-solvent, a skin layer 11a and a porous layer 11 b are formed to form a membrane.

A monomer for interface polymerization of the polymer of the polymer matrix layer 12 may be a monomer for a polymer selected from polyamide, cross-linked polyamide, polyamide-hydrazide, poly(amide-imide), polyimide, poly (allylamine)hydrochloride/poly(sodium styrenesulfonate) (PAH/PSS), polybenzimidazole, sulfonated poly(aryleneethersulfone), and a combination thereof. The polymer matrix layer 12 may be formed with a complex material of a polymer for a polymer matrix layer 12 and an inorganic material composite. The complex may be prepared by adding the inorganic material for polymer matrix layer 12 during the interface polymerization. The inorganic material may include zeolite, a metal oxide, carbon nanotubes, and the like, but is not limited thereto.

Generally, although the concentration of the polymer solution may be decreased to form a finger-like structure, or the porosity may be increased to permit water when it is coated with a polymer solution, the polymer solution is required to have a concentration of greater than or equal to the certain level to providing a coating (or to provide a membrane with fewer defects than a certain level). The certain level of concentration may be calculated by "critical polymer concentration" (Chung et al., Journal of Membrane Science 133 (1997) 161-175; and Peng et al., Journal of Membrane Science 318 (2008), 363-372). When a shear viscosity is measured while changing the polymer concentration, the shear viscosity is slowly increased according to increasing the polymer concentration, and the increase rate is sharply increased at greater than or equal to the certain level of concentration. The critical polymer concentration is determined by a point where the extrapolation line of shear viscosity in a lower polymer concentration is closed by the extrapolation line of shear viscosity at a higher polymer concentration. Thereby, the concentration of the polymer solution is adjusted at greater than or equal to the determined critical polymer concentration in order to be coated without defects.

The critical polymer concentration is different depending upon the kind of polymer. The polymer including the structure unit represented by Chemical Formula 1 may decrease the lowest concentration capable of coating compared to other known polymers for a separation membrane, and thereby the porosity may be increased.

On the other hand, in the forward osmosis separation membrane, the salt of draw solution may be reversely passed toward the feed solution. If the reverse salt flux is increased, the concentration of draw solution may be decreased to reduce the osmotic pressure. Accordingly, the reverse salt reflux should be decreased to accomplish the beneficial membrane characteristics. When the concentration of the polymer solution is decreased, the reverse salt flux is rather increased, so the polymer concentration may be selected within the appropriate range considering these together.

For example, the polymer solution may include a polymer including the structure unit represented by Chemical Formula 1 at about 9 to about 15 wt%. For example, the polymer solution may include the polymer at about 10 to about 12 wt%. When the polymer solution having the concentration within the range is coated, the defects of membrane may be decreased.

Before immersing in a non-solvent coagulation bath, evaporation may be further included, and the evaporation may be performed at about 20 °C to about 40 °C, for about 1 minute to about 30 minutes.

As the coagulation bath, for example, distilled water may be used, and the temperature may be controlled to about 15 °C to about 50 °C. The immersing time in the coagulation bath may be about 1 minute to about 30 minutes.

After immersing in the non-solvent coagulation bath to form a membrane, the membrane may be annealed at about 50 °C to about 100 °C to heat treat it.

The internal structure of the membrane and the structure of the pore may be varied by controlling the process conditions such as evaporation time and the heat treatment temperature and time. Under the process conditions within the above illustrated ranges, surface pores of the membrane may become small and the internal porosity may become large.

A skin layer 11a and a porous layer 11 b with a finger-like internal pore structure may be formed by the above separation membrane manufacturing method, and pores may be formed by the porous layer thus minimizing internal concentration polarization. The finger-like structure of the porous layer 11b is very advantageous for securing a good permeation flow rate.

The details of the polymer are as described above.

In the separation membrane 10 manufacturing method, the polymer solution may include about 9 to about 15 wt% of the polymer, about 0 to about 10 wt% of a pore forming agent, and about 75 to about 91 wt% of the organic solvent. The above ranges are suitable for manufacturing a separation membrane using non-solvent induced phase separation (NIPS).

The non-solvent induced phase separation is a method of manufacturing a separation membrane by dissolving a polymer in a solvent and then impregnating it in a non-solvent, which is applicable for manufacture of the separation membrane. This method may easily manufacture a separation membrane, has a low manufacture cost, and may be applied for manufacture of various separation membranes.

As explained, since the polymer may be prepared with a high molecular weight, it may realize high strength of a separation membrane, and thus it is suitable for manufacturing a finger-like structure by non-solvent induced phase

separation.

The substrate may be a glass plate or a polyester non-woven fabric, but is not limited thereto.

The casting of the polymer solution on a substrate may include casting the polymer solution on the substrate to a thickness of about 25 μm to about 200 μm. The thickness range may be appropriately controlled according to the objective usage which the separation membrane is applied.

The pore forming agent may include polyvinylpyrrolidone, polyethylene glycol, polyethyloxazoline, glycerol, ethylene glycol, diethylene glycol, ethanol, methanol, acetone, phosphoric acid, acetic acid, propanoic acid, lithium chloride, lithium nitrate, lithium perchlorate, and a combination thereof, but is not limited thereto.

The organic solvent may include acetone, acetic acid methanol, 1-methoxy-2-propanol, 1,4-dioxane with a low boiling point (boiling point of less than about 120 °C), N-methyl-2-pyrrolidone (NMP), dimethyl acetamide (DMAC), dimethyl formamide (DMF) with a high boiling point (boiling point of about 150 °C to about 300 °C), and a combination thereof, but is not limited thereto.

The non-solvent is a solvent in which the polymer is insoluble, and in general, water may be used because it is easily available and advantageous in terms of cost.

The non-solvent and the solvent should be miscible.

As described in above, after providing the support layer 11, the polymer matrix layer 12 may be stacked on at least one surface of the support layer 11 according to the interface polymerization reaction. For example, the polymer matrix layer 12 may be stacked on the skin layer 11a of the support layer 11.

First, a monomer for forming a polymer for a polymer matrix layer 12 is prepared. The polymer for a polymer matrix layer 12 and the monomer thereof are the same as described above. A part of prepared monomers is prepared as an aqueous solution, and a part thereof is mixed with an organic solvent which is immiscible with water to provide a solution, so solutions including two kinds of monomers are prepared. In this case, a mixed solution in which an inorganic material is further added to the prepared monomer to provide the polymer matrix layer 12 may be prepared. The two kinds of solutions form an interface and are not miscible with each other since water and the organic solvent are immiscible, and the monomer included in the two solutions may be polymerized in the interface, which is called interface polymerization. The polymer matrix layer 12 may be formed according to the interface polymerization. Since the membrane having a very thin thickness, for example, the membrane having a nano-sized thickness, may be formed according to the interface polymerization, the polymer matrix layer 12 formed by the interface polymerization may be formed in a form of an ultrathin film having a very thin thickness.

The method of fabricating the separation membrane 10 may further include an annealing process after providing a support layer 11 and stacking a polymer matrix layer 12 according to the interface polymerization to provide a composite membrane. For example, the annealing process may be performed at a temperature of about 60 to about 95 °C for about 1 minute to 30 minutes. Generally, the cellulose-based polymer may decrease the pore size of the membrane by the thermal annealing process, and the thermal annealing process may also be performed while fabricating the composite membrane.

The skin layer 11a of the separation membrane 10 obtained according to the method of fabricating the separation membrane 10 has an appropriate thickness and density by using the pore additive, so defects are not found after the thermal annealing process, and it may have surface characteristics so that it is stacked with the polymer matrix layer 12 to provide a composite membrane.

When the annealing process is further performed to the separation membrane 10, the water-permeable flow rate is decreased before and after the annealing, which is considered to be because the pore size is adjusted to be small. By performing the annealing process, the desirable water-permeable flow characteristics may be obtained. For example, the water-permeable flow rate suitable for the forward osmosis separation membrane may be provided by adjusting the annealing conditions such as temperature, time, or the like.

According to example embodiments, a forward osmosis water treatment device may include a feed solution including impurities to be purified; an osmosis draw solution having higher osmotic pressure than the feed solution; the separation membrane positioned so that one side contacts the feed solution and the other side contacts the osmosis draw solution; a recovery system for separating a draw solute from the osmosis draw solution; and a connector for reintroducing the draw solute of the osmosis draw solution separated by the recovery system into the osmosis draw solution contacting the separation membrane 10.

The forward osmosis device may further include a means (e.g., treatment portion) for producing treated water from the rest of the osmosis draw solution including the water that has passed through the semi-permeable separation membrane by osmotic pressure from the feed solution to the osmosis draw solution, from which the draw solute has been separated by the recovery system.

The separation membrane 10 is the same as described above.

As a separation membrane used in a forward osmosis process is more hydrophilic, and has a thinner thickness and higher porosity, the permeation flow rate is improved. Therefore, the above-explained separation membrane is suitable for use in the forward osmosis process.

The operation mechanism of the forward osmosis device is as follows. Water in the feed solution to be treated is passed through the membrane and moves to an osmosis draw solution of a higher concentration due to osmotic pressure. The osmosis draw solution including the water from the feed solution moves to a recovery system for the draw solute to be separated, and the residue solution is output to obtain treated water. Further, the separated draw solute is reused (reintroduced into the osmosis draw solution) so as to contact the feed solution to be treated via the separation membrane.

FIG. 2 is a schematic view of a forward osmosis device according to a non-limiting embodiment that is operated according to the above mechanism.

Referring to FIG. 2, the recovery system includes a device for separating a draw solute from the osmosis draw solution.

According to the forward osmosis process, water molecules are moved from a feed solution to an osmosis draw solution having a higher concentration than the feed solution. Then, the draw solute is separated from the osmosis draw solution such that fresh water is produced. The draw solute can be reused by reintroducing it into the osmosis draw solution.

The feed solution may include sea water, brackish water, waste water, tap water for drinking water processing, and the like.

For example, the forward osmosis device may be used for water purification, waste water treatment and reuse, sea water desalination, and the like.

Hereinafter, example embodiments are disclosed in more detail with reference to the following examples. However, the following are merely examples and are not limiting.

(Examples)

Synthesis Example 1: Synthesis of acetylated cellulose ether polymer

About 70 g of hydroxypropyl methyl cellulose, about 1120 g of acetic acid anhydride, and about 350 g of pyridine are introduced in a 3 L reactor equipped with an agitator, and then the mixture is agitated at about 200 rpm and reacted at about 90 °C for about 3 hours to prepare acetylated cellulose ether. Herein, pyridine is used as a catalyst. The above-prepared acetylated cellulose ether has a degree of substitution by a methyl group of about 1.94, a degree of molar substitution by a hydroxypropyl of about 0.25, a degree of substitution by an acetyl group of about 1.15, and a weight average molecular weight of about 280,000.

Example 1

About 9 wt% of the polymer prepared in Synthesis Example 1 and about 4 wt% of LiCl as a pore forming agent are mixed with dimethyl acetamide (DMAC) to prepare a polymer solution. The polymer solution is casted on a polyester non-woven fabric to a thickness of about 150 μm. The casted substrate is immersed in a coagulation bath of DI water, at 25 °C. Deionized water is dripped to the formed membrane to clean remaining solvent thus manufacturing a separation membrane. Subsequently, the formed support layer is immersed in 2 wt% of a 1.3-phenylene diamine (MPD) aqueous solution for 120 seconds, and excessive solution is removed from the membrane surface. The support layer in which MPD is impregnated is immersed in 0.1 wt% of a 1,3,5-benzene tricarbonyl trichloride (TMC) solution in Isopar-C (hydrocarbon solvent, paraffin-based) for 60 seconds. During this process, a dense polymer layer of an ultra-thin polyamide layer is provided as a second layer thus providing a composite membrane. Then the composite membrane is washed with a 0.2 wt% of $Na_2CO_3$ aqueous solution and deionized water to provide a separation membrane.

Example 2

A separation membrane is manufactured in accordance with the same procedure as in Example 1, except that the polymer solution is prepared to include 10 wt% of the polymer obtained from Synthesis Example 1.

Example 3

A separation membrane is manufactured in accordance with the same procedure as in Example 1, except that the polymer solution is prepared to include 11 wt% of the polymer obtained from Synthesis Example 1.

Example 4

A separation membrane is manufactured in accordance with the same procedure as in Example 1, except that

the polymer solution is prepared to include 12 wt% of the polymer obtained from Synthesis Example 1.

Comparative Example 1

10 wt% of the polymer prepared in Synthesis Example 1 and about 4 wt% of LiCl as a pore forming agent are mixed with dimethyl acetamide (DMAC) to prepare a polymer solution. The polymer solution is casted on a polyester non-woven fabric in a thickness of 150 $\mu$m. The casted substrate is immersed in a coagulation bath of DI water, at 25 °C. Deionized water is dropped to the formed membrane to clean remaining solvent thus manufacturing a separation membrane.

Comparative Example 2

A separation membrane is manufactured in accordance with the same procedure as in Comparative Example 1, except that the polymer solution is prepared to include 11 wt% of the polymer obtained from Synthesis Example 1.

Comparative Example 3

A separation membrane is fabricated in accordance with the same procedure as in Comparative Example 1, except that the polymer solution is prepared to include 12 wt% of the polymer obtained from Synthesis Example 1.

FIG. 3A and FIG. 3B are scanning electron microscope (SEM) photographs of a support layer obtained from Example 2 with differing magnification. As shown in FIG. 3A, it is confirmed that a skin layer is formed in a support layer in 5 $\mu$m; and from FIG. 3A and FIG. 3B, it is confirmed that the separation membrane obtained from Example 2 includes a porous layer having a well formed finger-like structure.

For the separation membrane according to Example 2, each of $m_1$, $m_2$, $\rho_w$, and $\rho_p$ (definitions are as defined in the detailed description) in Equation 1 is measured, and porosity ($\varepsilon$) is calculated from the same, which is 91 %.

[Equation 1]

$$\varepsilon = \frac{(m_1 - m_2)/\rho_w}{(m_1 - m_2)/\rho_w + m_2/\rho_p} \times 100$$

For separation membranes obtained from Examples 2 to 4, a structure factor S is calculated by the following Equation 2, and the results are shown in the following Table 1.

[Equation 2]

$$S = KD = \left(\frac{D}{J_w}\right) \ln\left(\frac{B + A\Pi_{Db}}{B + J_w}\right)$$

Herein, in the above Chemical Formula, each parameter is the same as described in the detailed description.

Factors for determining A and B in the crossflow reverse osmosis test unit in the laboratory size are measured and determined. The effective separation membrane area is 60 $cm^2$, the crossflow speed is 10.7 cm/s, and the temperature is 25 $\pm$ 0.5 °C. First, the separation membrane is compressed using deionized water at 400 psi (27.6 bar). $A = J_w^{RO}/\Delta P$ is calculated by dividing the volume permeability by the area of the separation membrane. A salt rejection rate is defined by maintaining the application pressure at 400 psi (27.6 bar), and the rejection rate of 200 ppm NaCl solution was measured using an electroconductivity measurer.

The intrinsic water permeability (A) is calculated in the reverse osmosis system according to the following equation.

$$A = J_w^{RO} / \Delta P$$

The measured NaCl rejection rate (R) is calculated by R=1-cp/cb (cb is a salt concentration of the bulk feed solution, and cp is a salt concentration of the permeate).

In the reverse osmosis system, a solute permeation coefficient (B) is calculated according to the following equation.

$$B = J_w^{RO} \left( \frac{1-R}{R} \right) \exp \left( -\frac{J_w^{RO}}{k} \right)$$

Here in, k is a mass transfer coefficient in a crossflow cell and is calculated by compensating the laminar and the shape of the rectangular cell.

The constants A and B are shown in the following Table 1.

The separation membrane is tested in the forward osmosis cell to evaluate the performance in the forward osmosis mode. The unit cell is formed in a channel having a length of 77 mm, a width of 26 mm, and a depth of 3 mm, and the effective area of the separation membrane is 20.2 $cm^2$ in both surfaces. The unit cell is operated by a co-current crossflow without a mesh spacer. The crossflow velocity is 10.7 cm/s, and a water bath is kept at the temperature at 25±0.5 °C in both the feed solution and the draw solution. Both volumes of initial feed solution and draw solution are 2.0 L. A 1.5M NaCl solution is used as a draw solute, and deionized water is used as a feed solution. A resultant bulk osmotic pressure difference is 75.6 bar (calculated by the software package of OLI Systems, Inc. (Morris Plains, NJ)). After stabilizing the water permeation flow, it is monitored for one hour to calculate the average. Since the water volume permeability is relatively lower than the volume of the draw solution, the draw solution concentration is considered to be constant. K is calculated as described in the detailed description to obtain the structure factor S in Equation 2, and the results are shown in the following Table 1.

(Table 1)

| | A [m/s/Pa] | B [m/s] | Forward osmosis water permeation flow rate [LMH] | Reverse salt flux [gMH] | Structure factor (S) [μm] |
|---|---|---|---|---|---|
| Example 2 | $2.04*10^{-11}$ | $2.58*10^{-5}$ | 10.54 | 4.56 | 583 |
| Example 3 | $2.03*10^{-11}$ | $2.58*10^{-5}$ | 9 | 1.14 | 690 |
| Example 4 | $1.47*10^{-12}$ | $7.89*10^{-7}$ | 5.75 | 0.13 | 1349 |

In Table 1, it is confirmed that Examples 2 to 4 have appropriate characteristics required to be used for a forward osmosis separation membrane from the results of the structure factor (S).

Evaluation of water permeation flow rate characteristic in forward osmosis process

Each separation membrane obtained from the examples and comparative examples is applied to the forward osmosis process and measured for water permeation flow rate and reverse salt flux of a NaCl salt.

The conditions of performing the forward osmosis process are as follows: deionized water is used as a feed solution; NaCl (58.44 g/mol) having a concentration of 1.5 M is used as a draw solution; the separation membranes obtained from Examples 2 to 4 and Comparative Examples 2 to 4 are cut into a size of 2.6 cm*7.7 cm size; and a crossflow velocity is 10.7 cm/s.

FIG. 4 is a graph showing the water permeation flow rate when the separation membranes obtained from Examples 1 to 4 are applied to the forward osmosis separation membrane. The unit of water permeation flow rate is designated as LMH, and LMH means the water passing amount per unit time. L refers to water amount (liter) passed through the membrane, M refers to the membrane area (m2), and the H refers to the passing time. In other words, it is a unit of evaluating how many liters of water are passed through the membrane area of 1 $m^2$ per hour.

FIG. 5 is a graph showing reverse salt flux of a NaCl salt when the separation membranes obtained from

Examples 2 to 4 are applied to a forward osmosis separation membrane. The unit of reverse salt flux is gMH, and gMH is the passing salt amount per unit time. The g refers to mass (g, gram) of salt passed through the membrane, the M is the membrane area ($m^2$), and the H is the passing time (hour). In other words, it is a unit of evaluating how many grams of salt are passed through the membrane area of 1 $m^2$ per hour.

FIG. 6 is a graph showing water permeation flow rate and reverse salt flux of a NaCl salt when the separation membranes obtained from Comparative Examples 1 to 3 are applied to a forward osmosis separation membrane. From the results shown in FIG. 6, the separation membranes obtained from Comparative Examples 1 to 3 have very high reverse salt flux levels of a NaCl salt compared to the separation membranes obtained from Examples 2 to 4.

It is confirmed that the separation membranes according to the examples show appropriate levels of water permeable flow rate characteristics required for applying to the forward osmosis separation membrane, and NaCl reverse salt flux is remarkably decreased compared to the separation membranes of the comparative examples.

While this disclosure has been described in connection with various examples, it is to be understood that the disclosure is not limited to the disclosed examples, but, on the contrary, is intended to cover various modifications and equivalent arrangements included within the scope of the appended claims.

<Description of Symbols>

| | |
|---|---|
| 10: separation membrane | 11: support layer |
| 11a: skin layer | 11b: porous layer |
| 12: polymer matrix layer | |

## Claims

1. A separation membrane, comprising:

    a support layer including a polymer including a structural unit represented by the following Chemical Formula 1; and
    a polymer matrix layer:

[Chemical Formula 1]

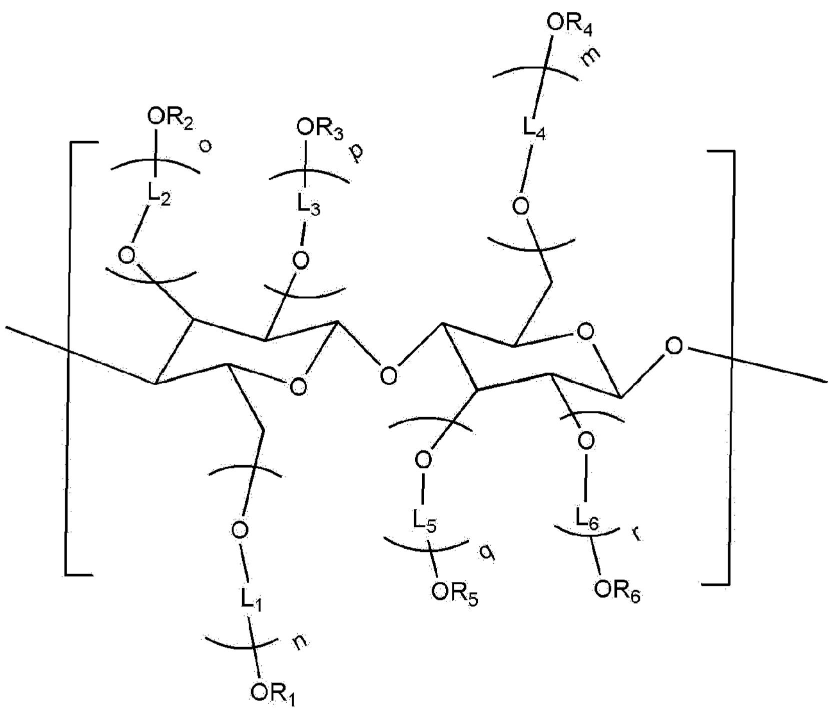

wherein, in the above Chemical Formula 1,

$R_1$ to $R_6$ are each independently hydrogen, a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, a substituted or unsubstituted C7 to C30 arylalkyl group, or $-COR_7$,

$R_7$ is a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, or a substituted or unsubstituted C7 to C30 arylalkyl group,

provided that at least one of $R_1$ to $R_3$ and at least one of $R_4$ to $R_6$ are each independently the same or different and are $-COR_7$, and

at least one of $R_1$ to $R_3$ and at least one of $R_4$ to $R_6$ are each independently the same or different, and are a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

$L_1$ to $L_6$ are each independently a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,

n and m are each independently an integer ranging from 0 to 150, provided that the sum of n and m is at least 1, and o, p, q, and r are each independently an integer ranging from 0 to 100.

2. The separation membrane of claim 1, wherein the polymer has a degree of substitution (DS) by $R_1$ to $R_6$ of an alkyl group, a cycloalkyl group, a heterocycloalkyl group, an aryl group, a heteroaryl group, an alkylaryl group, or an arylalkyl group of about 0.5 to about 2.5 per anhydrous glucose unit, and has a degree of substitution by the substituents of $-COR_7$ in the above Chemical Formula 1 of about 0.5 to about 2.5 per anhydrous glucose unit.

3. The separation membrane of claim 1 or 2, wherein a degree of substitution by the substituents of $-COR_7$ in the above Chemical Formula 1 ranges from about 0.8 to about 2 per anhydrous glucose unit.

4. The separation membrane of any of claims 1-3, wherein the support layer includes a skin layer and a porous layer, wherein the skin layer has a higher density than the porous layer.

5. The separation membrane of claim 4, wherein the porous layer has a finger-like porous structure.

6. The separation membrane of claim 5, wherein the finger-like porous structure includes finger-like pores having a longest diameter of about 10 μm to about 50 μm, an average of the longest diameter of the finger-like pores ranging from about 20 μm to about 40 μm, and a distance between adjacent finger-like pores ranges from about 1 μm to about 20 μm.

7. The separation membrane of any of claims 1-6, wherein the support layer has a porosity (ε) as defined by Equation 1 of about 50 % to about 95 %:

[Equation 1]

$$\varepsilon = \frac{(m_1 - m_2)/\rho_w}{(m_1 - m_2)/\rho_w + m_2/\rho_p} \times 100$$

wherein, in the above Equation 1, $m_1$ is a mass (g) of the support layer in which water is impregnated, $m_2$ is a mass (g) of a dried separation membrane, $\rho_w$ is a density (g/cm$^3$) of water, and $\rho_p$ is a density (g/cm$^3$) of the polymer of the support layer.

**8.** The separation membrane of any of claims 1-7, wherein the polymer matrix layer is formed on one surface or both surfaces of the support layer.

**9.** The separation membrane of any of claims 4-6, wherein the polymer matrix layer contacts the skin layer of the support layer.

**10.** The separation membrane of any of claims 1-9, wherein the polymer matrix layer includes a material selected from polyamide, cross-linked polyamide, polyamide-hydrazide, poly(amide-imide), polyimide, poly(allylamine)hydrochloride/poly(sodium styrenesulfonate) (PAH/PSS), polybenzimidazole, sulfonated poly(aryleneethersulfone), and a combination thereof, or a composite of an inorganic material and one selected from polyamide, cross-linked polyamide, polyamide-hydrazide, poly(amide-imide), polyimide, poly(allylamine)hydrochloride/poly(sodium styrenesulfonate) (PAH/PSS), polybenzimidazole, sulfonated poly(aryleneethersulfone), and a combination thereof.

**11.** The separation membrane of any of claims 1-10, wherein the separation membrane has a structure factor (S) of about 10 to about 1500 defined by the following Equation 2:

[Equation 2]

$$S = KD = \left(\frac{D}{J_w}\right)\ln\left(\frac{B + A\Pi_{Db}}{B + J_w}\right)$$

wherein, in the above Equation 2, A and B are determined by the following equations:

$$A = J_W^{RO} / \Delta P$$

$$B = J_W^{RO}\left(\frac{1-R}{R}\right)\exp\left(-\frac{J_W^{RO}}{k}\right)$$

wherein $A = J_W^{RO} / \Delta P$ is water permeability (unit: LMH) in a reverse osmosis (RO) system, $\Delta P$ is an applied pressure in the reverse osmosis (RO) system, R is a salt rejection rate in the reverse osmosis (RO) system, R=1-cp/cb (cb is a salt concentration of a bulk feed solution and cp is a salt concentration of permeated water), k is a material transfer coefficient in a crossflow cell,
D is a diffusion coefficient of a draw solute in a forward osmosis system, $J_w$ is a water permeation flow rate of the separation membrane in the forward osmosis system, $\Pi_{D,b}$ is a bulk osmotic pressure of a draw solution in the forward osmosis system, and
K is calculated from the following equation $K=t_s\tau/D\varepsilon$, wherein $t_s$ is a thickness of the support layer, $\tau$ is tortuosity of the separation membrane, and $\varepsilon$ is a porosity of the separation membrane.

**12.** A method of manufacturing a separation membrane, comprising:

preparing a polymer solution including a polymer and an organic solvent, the polymer including a structural unit represented by the following Chemical Formula 1;
casting the polymer solution on a substrate;
immersing the substrate casted with the polymer solution in a non-solvent to form a support layer including a skin layer and a porous layer; and
performing an interface polymerization reaction on the support layer to provide a polymer matrix layer:

[Chemical Formula 1]

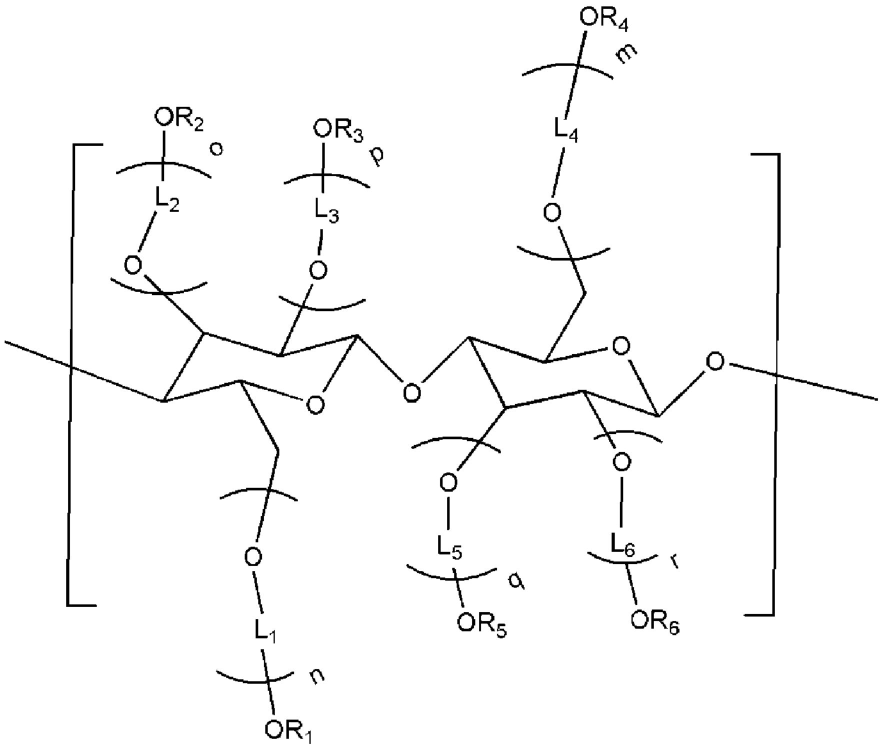

wherein, in the above Chemical Formula 1,
$R_1$ to $R_6$ are each independently hydrogen, a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, a substituted or unsubstituted C7 to C30 arylalkyl group, or $-COR_7$,
$R_7$ is a substituted or unsubstituted C1 to C30 alkyl group, a substituted or unsubstituted C3 to C30 cycloalkyl group, a substituted or unsubstituted C2 to C30 heterocycloalkyl group, a substituted or unsubstituted C6 to C30 aryl group, a substituted or unsubstituted C2 to C30 heteroaryl group, a substituted or unsubstituted C7 to C30 alkylaryl group, or a substituted or unsubstituted C7 to C30 arylalkyl group,
provided that at least one of $R_1$ to $R_3$ and at least one of $R_4$ to $R_6$ are each independently the same or different and are $-COR_7$, and
at least one of $R_1$ to $R_3$ and at least one of $R_4$ to $R_6$ are each independently the same or different, and are a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,
$L_1$ to $L_6$ are each independently a substituted or unsubstituted C1 to C30 alkylene group, a substituted or unsubstituted C3 to C30 cycloalkylene group, a substituted or unsubstituted C2 to C30 heterocycloalkylene group, a substituted or unsubstituted C6 to C30 arylene group, a substituted or unsubstituted C2 to C30 heteroarylene group, a substituted or unsubstituted C7 to C30 alkylarylene group, or a substituted or unsubstituted C7 to C30 arylalkylene group,
n and m are each independently an integer ranging from 0 to 150, provided that the sum of n and m is at least 1, and o, p, q, and r are each independently an integer ranging from 0 to 100.

**13.** The method of claim 12, wherein the polymer solution comprises the polymer including the structure unit represented by Chemical Formula 1 at a concentration of about 9 to about 15 wt%.

**14.** A forward osmosis water treatment device, comprising:

a feed solution including impurities to be purified;
an osmosis draw solution having a higher osmotic pressure than the feed solution;
the separation membrane according to claim 1, the separation membrane positioned so that one side contacts the feed solution and the other side contacts the osmosis draw solution;
a recovery system configured to separate a draw solute from the osmosis draw solution; and
a connector configured to reintroduce the draw solute of the osmosis draw solution separated by the recovery system back into the osmosis draw solution contacting the separation membrane.

**15.** The forward osmosis water treatment device of claim 14, further comprising:

a means for producing treated water from a remainder of the osmosis draw solution from which the draw solute has been separated by the recovery system, the treated water including water that has passed through the separation membrane by osmotic pressure from the feed solution to the osmosis draw solution.

FIG.1

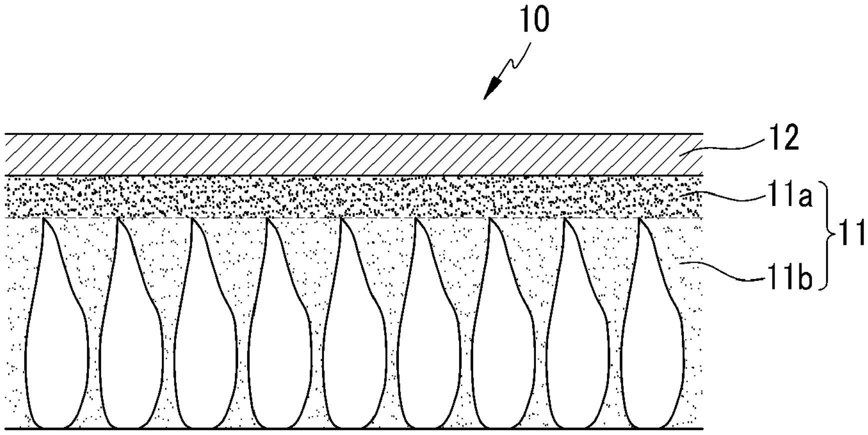

FIG.2

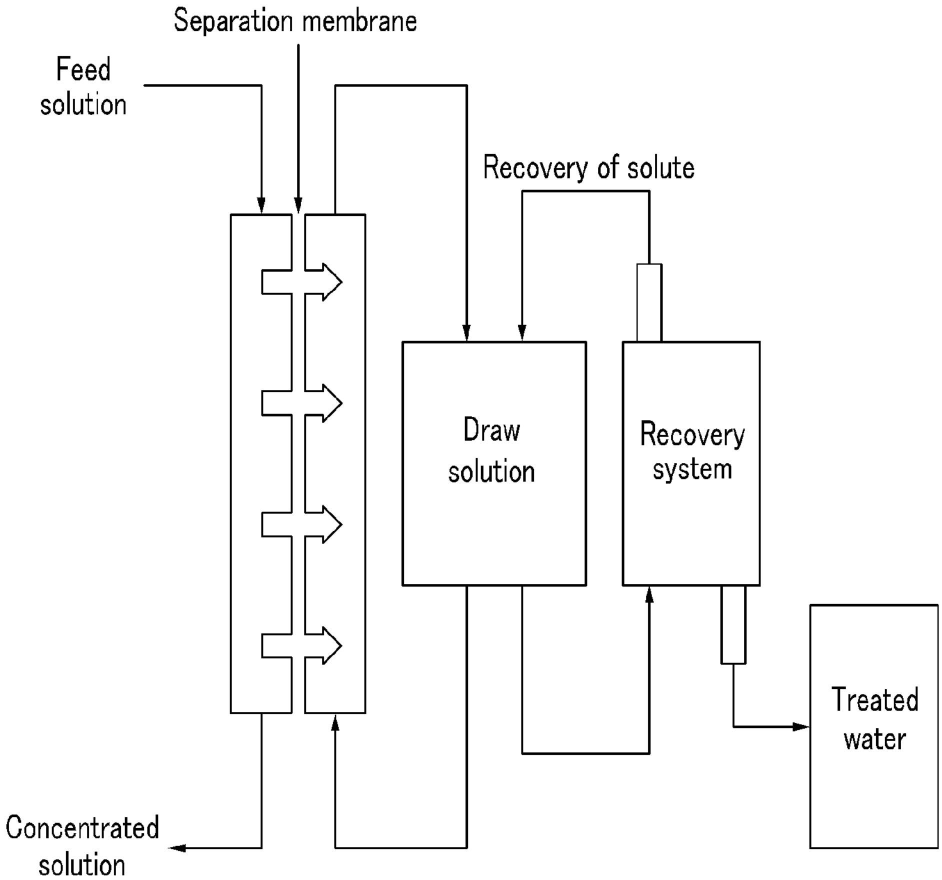
Separation membrane
Feed solution
Recovery of solute
Draw solution
Recovery system
Treated water
Concentrated solution

FIG.3A

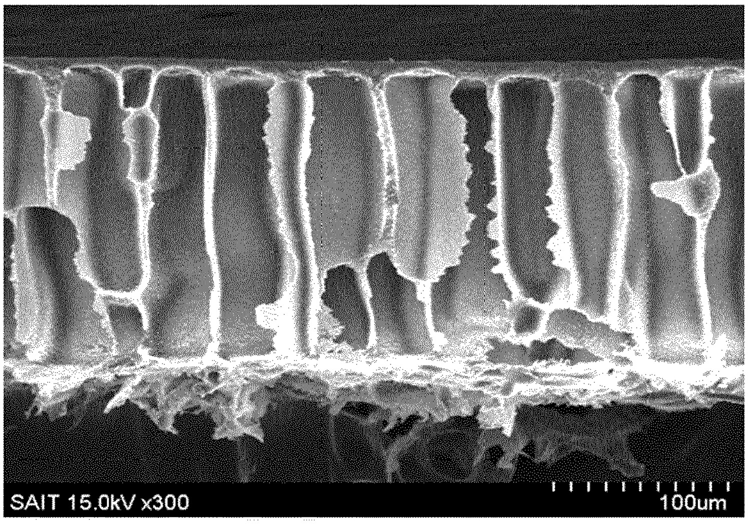


FIG.3B

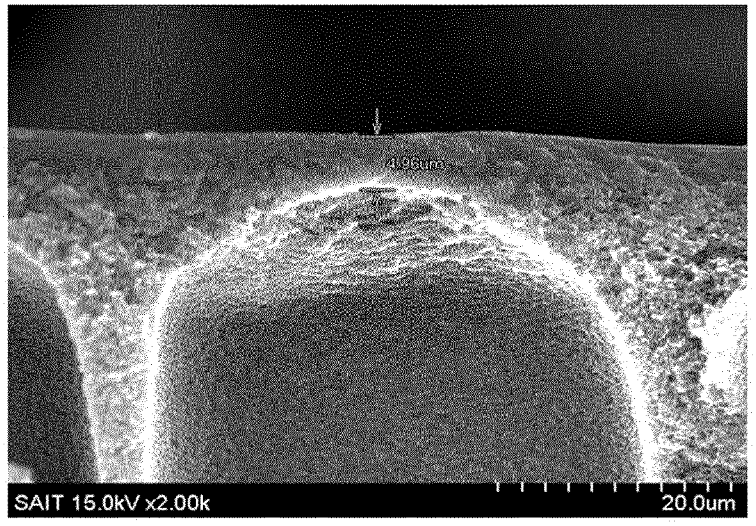

FIG.4

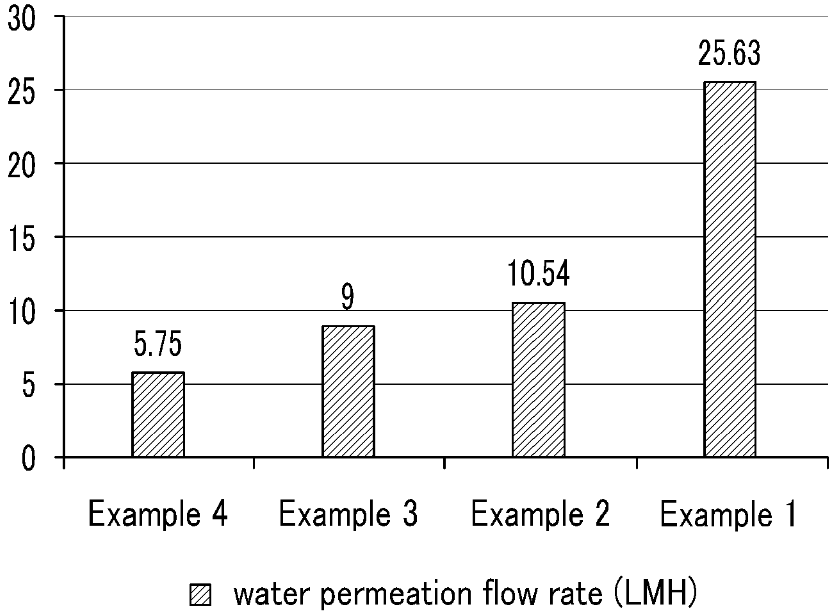
30
25
20
15
10
5
0
25.63
10.54
9
5.75
Example 4
Example 3
Example 2
Example 1
water permeation flow rate (LMH)

FIG.5

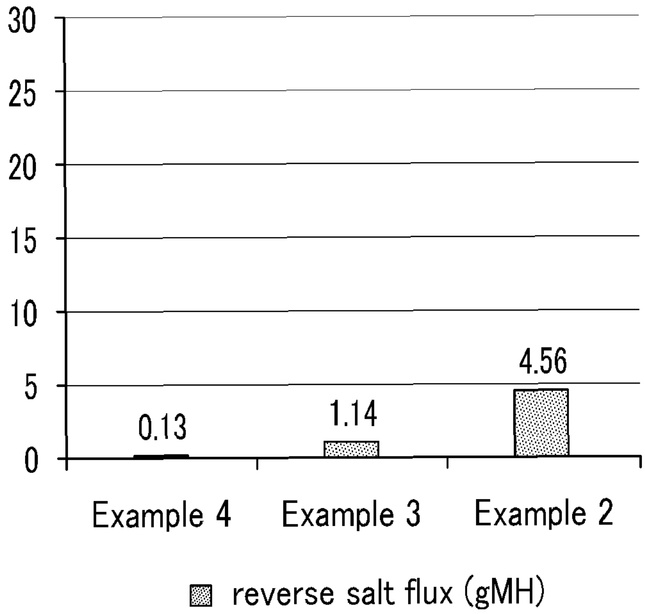
30
25
20
15
10
5
0
0.13
1.14
4.56
Example 4
Example 3
Example 2
reverse salt flux (gMH)

FIG.6

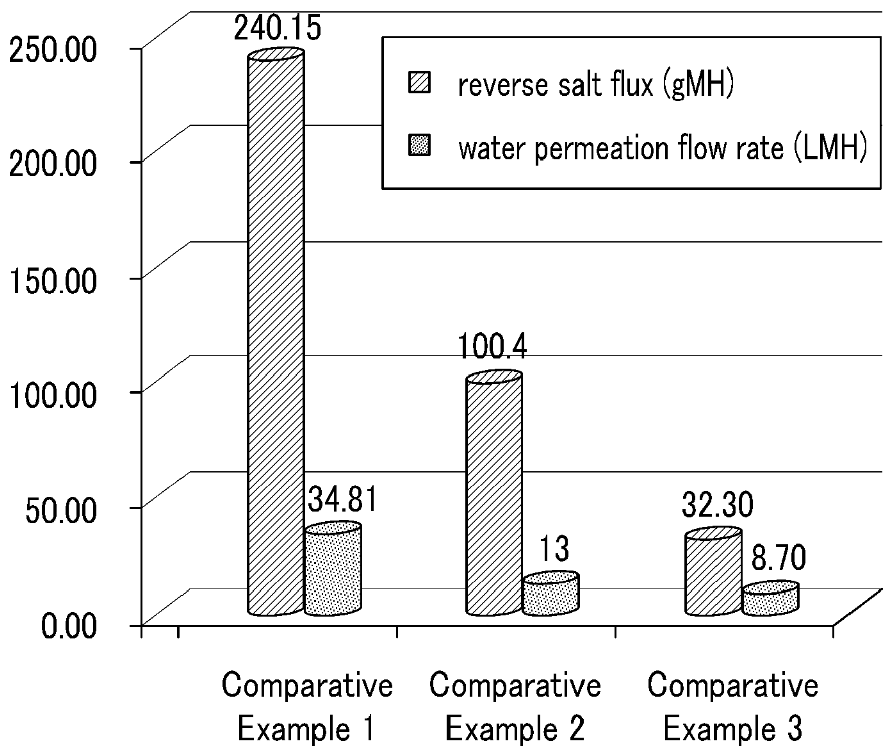
250.00
200.00
150.00
100.00
50.00
0.00
240.15
34.81
100.4
13
32.30
8.70
reverse salt flux (gMH)
water permeation flow rate (LMH)
Comparative Example 1
Comparative Example 2
Comparative Example 3

Europäisches Patentamt
European Patent Office
Office européen des brevets

# EUROPEAN SEARCH REPORT

Application Number
EP 12 17 7523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2011 0074201 A (KOREA RES INST CHEM TECH [KR]) 30 June 2011 (2011-06-30)<br>* examples 1-4 *<br>----- | 1-11 | INV.<br>B01D69/02<br>B01D69/10<br>B01D71/12 |
| X | WO 2011/069050 A1 (UNIV YALE [US]; YIP NGAI YIN [US]; PHILLIP WILLIAM A [US]; SCHIFFMAN J) 9 June 2011 (2011-06-09)<br>* claims 1,2,8,16, *<br>* the whole document *<br>----- | 1-15 | |
| X,P | KR 2012 0009820 A (KOREA RES INST CHEM TECH [KR]) 2 February 2012 (2012-02-02)<br>* paragraph [0056]; examples 1,2 *<br>* the whole document *<br>----- | 1-15 | |
| | | | TECHNICAL FIELDS SEARCHED (IPC) |
| | | | B01D |

The present search report has been drawn up for all claims

1

| Place of search | Date of completion of the search | Examiner |
|---|---|---|
| Munich | 22 October 2012 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 17 7523

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2012

| Patent document cited in search report | Publication date | Patent family member(s) | Publication date |
|---|---|---|---|
| KR 20110074201 A | 30-06-2011 | NONE | |
| WO 2011069050 A1 | 09-06-2011 | NONE | |
| KR 20120009820 A | 02-02-2012 | NONE | |

EPO FORM P0459

For more details about this annex : see Official Journal of the European Patent Office, No. 12/82